# EUROPEAN PATENT APPLICATION

(11) **EP 3 287 675 A1**
(43) Date of publication of application: **28.02.2018**
(21) Application number: 16824159.4
(22) Date of filing: 01.06.2016
(51) Int. Cl.: F16K 11/07, F16K 3/24

(54) **ROD-LIKE MEMBER AND VALVE DEVICE**

(30) Priority: 10.07.2015 JP 2015138604
(71) Applicant: KYB Corporation, Tokyo 105-6111 (JP)
(72) Inventor: ASAKURA, Yoshiaki, Tokyo 105-6111 (JP); FUJIWARA, Takeshi, Tokyo 105-6111 (JP); KOSHIMIZU, Tsutomu, Tokyo 105-6111 (JP)
(74) Representative: TBK
(86) International application number: PCT/JP2016/066146
(87) International publication number: WO 2017/010179

(57) **Abstract**

A spool (10) assembled into a valve device (100) includes first and second land portions (11, 12) each having a circular outer circumferential surface, and a dent portion 16 provided at a position away from a center axis (D) of the first land portion (11), the dent portion (16) being configured to determine a reference position in a circumferential direction of the first and second land portions (11, 12).

## Description

### TECHNICAL FIELD

The present invention relates to a rod-shaped member assembled into a fluid-pressure device and a valve device including the rod-shaped member.

### BACKGROUND ART

JPH10-202401A discloses a method of manufacturing a rod-shaped member such as a valve spool and the like. In this method, first, a material is held by a chuck. Subsequently, by placing a blade to a surface of the material while rotating the material together with the chuck, the material is cut and an outer circumferential surface of the rod-shaped member is machined to a circular shape. After that, by bringing an end mill closer to the material in a state where rotation of the material is stopped with the chuck, a stepped portion is formed in a circumferential direction on the outer circumferential surface of the material.

In the method disclosed in JPH10-202401A, a rotation angle of the chuck is detected. By stopping the rotation of the chuck on the basis of the detected rotation angle of the chuck, the aforementioned stepped portion is formed at a predetermined position in the circumferential direction of the rod-shaped member.

### SUMMARY OF INVENTION

A high coaxiality is required for the rod-shaped member such as a valve spool and the like. Thus, a bending amount of the rod-shaped member is measured during machining or after machining of the rod-shaped member. In bending measurement, displacement of the outer circumferential surface is detected by a displacement sensor at a plurality of spots of the rod-shaped member in the circumferential direction.

However, on the outer circumferential surface of the rod-shaped member such as a valve spool and the like, a stepped portion in the circumferential direction such as a notch is formed. When the displacement sensor detects displacement of the stepped portion, accurate bending amount cannot be measured. Thus, in the bending measurement, a position of the stepped portion in the circumferential direction is specified, and displacement of the outer circumferential surface needs to be detected by avoiding the stepped portion.

In the method disclosed in JPH10-202401A, since the position of the stepped portion is specified on the basis of the rotation angle of the chuck, the rod-shaped member cannot be removed from the chuck until the bending measurement is finished. Thus, a bending measuring function needs to be given to a device for machining the rod-shaped member, which complicates the device.

Moreover, if a plurality of devices for machining the rod-shaped member is prepared, the bending measuring function needs to be given to each of the devices. Thus, a cost is increased as compared with a case where a device for measuring the bending of the rod-shaped member is prepared separately the device machining the rod-shaped member.

An object of the present invention is to provide a rod-shaped member capable of specifying a predetermined position on an outer circumferential surface even if it is removed from the chuck.

According to one aspect of the present invention, a rod-shaped member is assembled in a fluid pressure device. The rod -shaped member includes a circular portion in which an outer circumferential surface has a circular shape, and a reference portion provided at a position away from a center axis of the circular portion, the reference portion being configured to determine a reference position in a circumferential direction of the circular portion.

### BRIEF DESCRIPTION OF DRAWINGS

Fig. 1 is a sectional view of a valve device including a spool according to an embodiment of the present invention and illustrates a state where the spool is at a shut-off position.
Fig. 2 is a sectional view of the valve device including the spool according to the embodiment of the present invention and illustrates a state where the spool is at a communication position.
Fig. 3 is a side view of the spool according to the embodiment of the present invention.
Fig. 4 is a plan view of the spool according to the embodiment of the present invention.
Fig. 5 is a view for explaining a bending measuring method using the spool according to the embodiment of the present invention and illustrates a state where displacement of an outer circumferential surface of the spool in the vicinity of one of the chucks is measured.
Fig. 6 is a view for explaining a bending measuring method using the spool according to the embodiment of the present invention and illustrates a state where the displacement of the outer circumferential surface of the spool in the vicinity of a center in an axial direction is measured.
Fig. 7 is a view explaining a bending measuring method using the spool according to the embodiment of the present invention and illustrates a state where the displacement of the outer circumferential surface of the spool in the vicinity of the other chuck is measured.
Fig. 8 is a side view of the spool according to another embodiment of the present invention.

### DESCRIPTION OF EMBODIMENTS

An embodiment of the present invention will be described below by referring to the attached drawings. Here, a case where a rod-shaped member is a spool 10 assembled into a valve device 100 that allows or shuts off a flow of working oil will be described. This embodiment can be also applied to the rod-shaped member of a fluid-pressure device in which another fluid such as working water is used as working fluid.

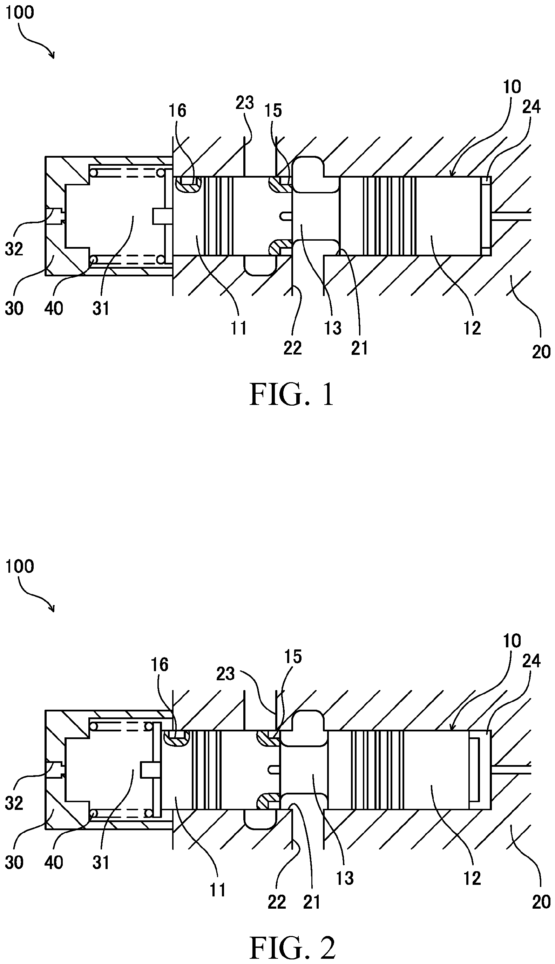

As illustrated in Figs. 1 and 2, the valve device 100 includes the spool 10 and a valve body 20 having an accommodating hole 21 that slidably accommodates the spool 10. In the valve body 20, first and second passages 22 and 23 communicating with the accommodating hole 21 are formed. The first passage 22 is connected to a pump (not shown), for example, and the second passage 23 is connected to an actuator (not shown), for example.

The spool 10 has a shut-off position in which the flow of the working oil from the first passage 22 to the second passage 23 is shut off (position shown in Fig. 1), and a communication position in which the flow of the working oil from the first passage 22 to the second passage 23 is allowed. The shut-off position and the communication position are switched by supply and shut-off of a pilot pressure to a pilot chamber 24.

The first passage 22 may be connected to a tank (not shown) and the second passage 23 may be connected to the actuator. In this case, at the shut-off position, the spool 10 shuts off the flow of the working oil from the second passage 23 to the first passage 22, while at the communication position, it allows the flow of the working oil from the second passage 23 to the first passage 22.

That is, the spool 10 has the shut-off position in which communication between the first passage 22 and the second passage 23 is shut off, and the communication position in which the communication between the first passage 22 and the second passage 23 is allowed.

The pilot chamber 24 is formed on one end of the accommodating hole 21. The other end portion of the accommodating hole 21 is opened in a side surface of the valve body 20, and an opening end is closed by a cap 30. The cap 30 defines a spring chamber 31 that is accommodates a spring 40. The spring chamber 31 communicates with the tank (not shown) through a drain port 32.

The spring 40 urges the spool 10 in a direction in which the pilot chamber 24 is contracted. When the pilot pressure is supplied to the pilot chamber 24, the spool 10 moves against an urging force of the spring 40 by the pilot pressure and is switched to the communication position. When the supply of the pilot pressure to the pilot chamber 24 is shut off, the spool 10 moves by the urging force of the spring 40 and is switched to the shut-off position.

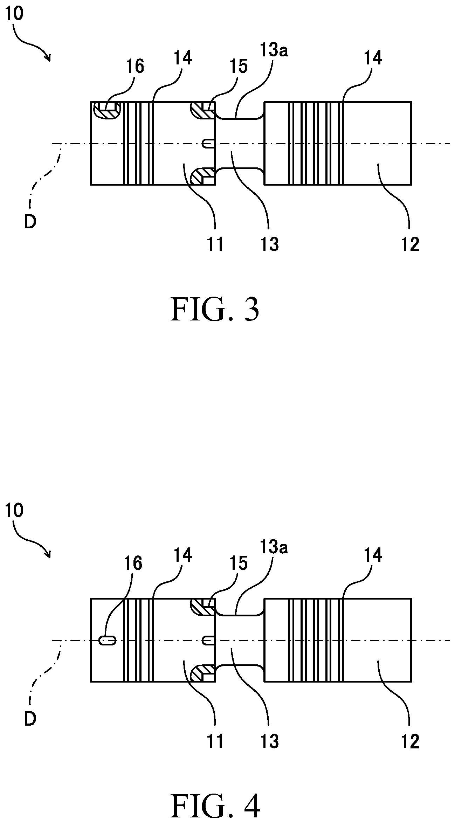

By referring to Figs. 3 and 4, the spool 10 will be described in more detail. Fig. 3 is a front view of the spool 10 and Fig. 4 is a plan view of the spool 10. In Figs. 3 and 4, a part of the spool 10 is illustrated as a sectional view.

The spool 10 has first and second land portions 11 and 12 and a small-diameter portion 13 formed having a diameter smaller than those of the first and second land portions 11 and 12. Each of the first and second land portions 11 and 12 is a circular portion having a circular outer circumferential surface. The smaller-diameter portion 13 is a circular portion having a circular outer circumferential surface similarly to the first and second land portions 11 and 12.

The small diameter portion 13 is located between the first and second land portions 11 and 12, and an annular groove 13a is formed between the first and second land portions 11 and 12. The first and second land portions 11 and 12 have dimensions in an axial direction longer than that of the annular groove 13a.

An outer diameter of each of the first and second land portions 11 and 12 is substantially equal to an inner diameter of the accommodating hole 21 (see Figs. 1 and 2). The first land portion 11 is faced with a spring chamber 31, while the second land portion 12 is faced with the pilot chamber 24 (see Figs. 1 and 2).

On the outer circumferential surface of each of the first and second land portions 11 and 12, a labyrinth seal 14 formed of a plurality of annular grooves is formed. On the outer circumferential surface of the first land portion 11, a plurality of notches 15 serving as a throttle that is communicates with the annular groove 13a is formed. By means of the notches 15, a stepped portion in a circumferential direction is formed on the outer circumferential surface of the first land portion 11.

On the outer circumferential surface of the first land portion 11, a dent portion 16 serving as a reference portion that determines a reference position in the circumferential directions of the first and second land portions 11 and 12 is formed. By determining a position of the notch 15 with respect to the dent portion 16 in advance, the position of the notch 15 in the circumferential direction is specified on the basis of the position of the dent portion 16.

The notch 15 and the dent portion 16 are formed by end milling, for example. By forming the notch 15 and the dent portion 16 in a state where the spool 10 is attached to a device for machining the spool 10, the notch 15 is formed at the position determined in advance with respect to the dent portion 16.

By referring to Figs. 1 and 2 again, an operation of the valve device 100 will be described.

In the state where the supply of the pilot pressure to the pilot chamber 24 is shut off, the spool 10 is at the shut-off position. Specifically, as illustrated in Fig. 1, the first land portion 11 shuts off the flow of the working oil from the first passage 22 to the second passage 23.

When the pilot pressure is supplied to the pilot chamber 24, the spool 10 moves against the urging force of the spring 40 by the pilot pressure and is switched to the communication position. Specifically, by means of the movement of the spool 10, the first passage 22 and the second passage 23 communicate with each other through the notch 15 (see Fig. 2).

When a higher pilot pressure is supplied to the pilot chamber 24, the spool 10 further moves against the urging force of the spring 40 by the pilot pressure. As a result, an opening area of the notch 15 is increased, and a flowrate of the working oil flowing from the first passage 22 to the second passage 23 increases.

When the supply of the pilot pressure to the pilot chamber 24 is shut off, the spool 10 moves by the urging force of the spring 40. As a result, the flow from the first passage 22 to the second passage 23 is shut off by the first land portion 11 (see Fig. 1).

As described above, the valve device 100 allows or shuts off the flow of the working oil in accordance with the position of the spool 10. Moreover, the valve device 100 controls the flowrate of the working oil in accordance with a movement amount of the spool 10 when the spool 10 is at the communication position.

The dent portion 16 is closed by an inner wall of the accommodating hole 21 both when the spool 10 is at the shut-off position and at the communication position. Therefore, the dent portion 16 does not affect the flow of the working oil.

In this embodiment, the dent portion 16 is closed by the inner wall of the accommodating hole 21 both at the shut-off position and the communication position. However, the dent portion 16 only needs to be formed at a position communicating with the first and second passages 22 and 23 when the spool 10 is at the communication position and at a position closed by the inner wall of the accommodating hole 21 when the spool 10 is at the shut-off position. Since the dent portion 16 is closed, leakage of the working oil from the first passage 22 through the dent portion 16 to the second passage 23 can be prevented.

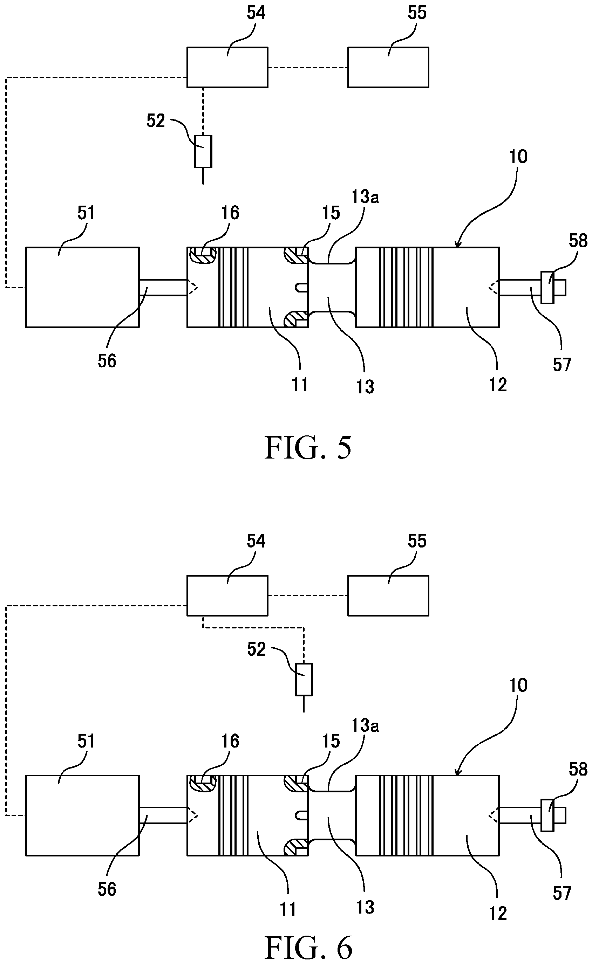

Subsequently, by referring to Figs. 5 to 7, a method of measuring a bending amount of the spool 10 will be described. The bending measurement of the spool 10 is carried out by a controller 54 that controls operations of a motor 51 and a displacement sensor 52 and a calculator 55 that calculates a bending amount on the basis of a detection result of the displacement sensor 52. The displacement sensor 52 is a laser displacement sensor, for example.

First, as illustrated in Fig. 5, centers of both ends of the spool 10 are held by spikes 56 and 57. The spike 56 is connected to the motor 51, and the spike 57 is supported by a bearing 58. By means of an operation of the motor 51, the spool 10 is rotated around an axis of the spool 10 together with the spikes 56 and 57.

When the spool 10 is held by the spikes 56 and 57, the controller 54 operates the motor 51 and the displacement sensor 52 and sets the spool 10 at the reference position (0-degree position).

Specifically, the controller 54 detects displacement of an annular region including the dent portion 16 in the outer circumferential surface of the first land portion 11 by the displacement sensor 52 while rotating the spool 10 by the motor 51. Since portions other than the dent portion 16 have circular outer circumferential surfaces, the position of the outer circumferential surface is hardly changed even if the spool 10 is rotated. Since a circumferential stepped portion is formed on the dent portion 16, the position of the outer circumferential surface is largely changed with the rotation of the spool 10. When the controller 54 determines that the position of the outer circumferential surface of the spool 10 detected by the displacement sensor 52 has been largely changed (when it determines that the change is not less than a value determined in advance, for example), it determines the rotation position at that time as the reference position (0-degree position).

Subsequently, the controller 54 detects displacement of the outer circumferential surface of the spool 10 in the vicinity of the spike 56 (hereinafter referred to as a "one-end portion outer circumferential surface") by the displacement sensor 52 while rotating the spool 10 by the motor 51. At this time, while the spool 10 makes one rotation, displacement detection is made a plurality of times (20 times at every 18 degrees, for example). The calculator 55 stores the detection result of the displacement sensor 52 together with a rotation position of the spool 10 at the displacement detection.

Subsequently, the controller 54 moves the displacement sensor 52 in the axial direction of the spool 10 as illustrated in Fig. 6 and detects the displacement of the outer circumferential surface of the spool 10 in the vicinity of the center in the axial direction (hereinafter referred to as a "center-part outer circumferential surface") by the displacement sensor 52. The movement of the displacement sensor 52 is made by a moving mechanism, not shown, including a motor and a rail, for example.

Similarly to the detection of the displacement of the one-end portion outer circumferential surface, the displacement detection is made a plurality of times (20 times at every 18 degrees, for example) while the spool 10 makes one rotation. The calculator 55 stores the detection result of the displacement sensor 52 together with the rotation position of the spool 10 at the displacement detection.

Before the displacement of the center-part outer circumferential surface is detected, the spool 10 is preferably set to the reference position again. By setting the spool 10 to the reference position again, a shift between the rotation position when the displacement of the one-end portion outer circumferential surface is detected and the rotation position when the displacement of the center-part outer circumferential surface is detected can be prevented.

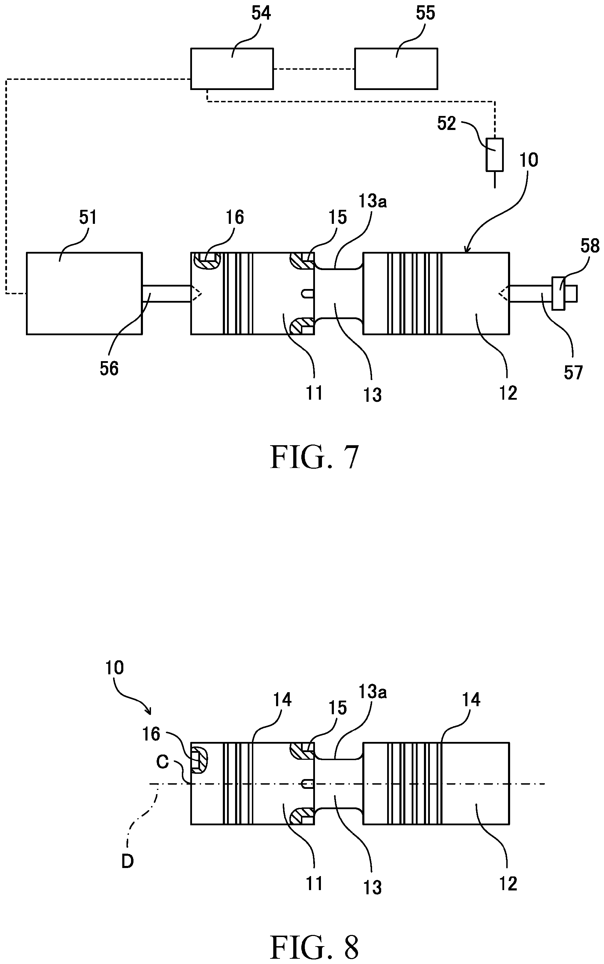

Subsequently, the controller 54 moves the displacement sensor 52 to the axial direction of the spool 10 and detects the displacement of the outer circumferential surface of the spool 10 in the vicinity of the spike 57 (hereinafter referred to as "the other end portion outer circumferential surface") by the displacement sensor 52 as illustrated in Fig. 7. Similarly to the detection of the displacement of the one-end portion outer circumferential surface, the displacement detection is made a plurality of times (20 times at every 18 degrees, for example) while the spool 10 makes one rotation. The calculator 55 stores the detection result of the displacement sensor 52 together with the rotation position of the spool 10 at the displacement detection. Before the displacement of the other end portion outer circumferential surface is detected, the spool 10 is preferably set to the reference position again.

Subsequently, the calculator 55 calculates the bending amount of the spool 10 from the detected displacements of the one-end portion outer circumferential surface, the center-part outer circumferential surface, and the other end portion outer circumferential surface. The bending amount of the spool 10 is calculated by comparing the displacements of the one-end portion outer circumferential surface, the center-part outer circumferential surface, and the other end portion outer circumferential surface detected at each rotation position while the spool 10 makes one rotation.

When the displacement sensor 52 detects the displacements of the positions of the dent portion 16 and the notch 15 and the calculator 55 uses this detection result for calculation of the bending amount at each of the rotation positions, accuracy of the calculated bending amount lowers. Thus, the calculator 55 calculates the bending amount by excluding the detection result of the displacements of the positions of the dent portion 16 and the notch 15. Since the position of the displacement sensor 52 is determined in advance, the displacement of the positions of the dent portion 16 and the notch 15 are specified on the basis of the rotation angles from the reference position, and the detection result of the displacement can be excluded.

By means of the aforementioned method, the bending amount of the spool 10 is measured.

In this embodiment, since the dent portion 16 is provided on the outer circumferential surface of the spool 10, the predetermined positions on the outer circumferential surfaces of the first and second land portions 11 and 12 are specified as positions away from the dent portion 16 in the circumferential directions of the land portions 11 and 12 by a predetermined distance. Therefore, even if the spool 10 is removed from the chuck of the device for machining the spool 10, the position of the notch 15 can be specified.

Since the bending measuring function is not needed in the device for machining the spool 10, the machining device can be prevented from being complicated. Moreover, when a plurality of the devices for machining the rod-shaped member is to be prepared, since there no more need to give the bending measuring function to each of the machining device by preparing the device for measuring the bending of the rod-shaped member separately from the machining device, a manufacturing cost of the spool 10 can be reduced.

Since the dent portion 16 is provided on the outer circumferential surface of the spool 10, when a portion other than the dent portion 16 in the outer circumferential surface of the spool 10 is to be machined (when the notch 15 is to be formed, for example), there is no need to remove the spool 10 from the device (not shown) for forming the dent portion 16 in the spool 10. Therefore, the spool 10 can be fabricated more easily.

In this embodiment, the dent portion 16 is provided on the outer circumferential surface of the first land portion 11, but it may be provided on the outer circumferential surface of the second land portion 12 or on the outer circumferential surface of the small-diameter portion 13 (a bottom surface of the annular groove 13a). Moreover, as illustrated in Fig. 8, the dent portion 16 may be provided at a position away from a center C of the end surface of the spool 10. In other words, the dent portion 16 may be provided at the position away from a center axis D of the spool 10.

The first and second land portions 11 and 12 have longer dimensions in the axial direction than the annular groove 13a. Thus, when the dent portion 16 is to be formed in the first or the second land portion 11 or 12, an area for providing the dent portion 16 can be ensured easily.

When the dent portion 16 is formed on the outer circumferential surface of the small-diameter portion 13 (the bottom surface of the annular groove 13a), there is no need to provide the dent portion 16 on the first and second land portions 11 and 12. Therefore, an influence of the dent portion 16 can be prevented from reaching the control of the flow of the working oil by the first and second land portions 11 and 12.

When the dent portion 16 is provided on the end surface of the spool 10, there is no need to change the position of the dent portion 16 from the center axis D of the spool 10 even in the spool 10 having a different length or outer diameter. Therefore, the predetermined position on the outer circumferential surface of the spool 10 can be specified more easily.

Moreover, the reference portion is not limited to the dent portion 16 but may be a mark without a raised portion. If the reference portion is a mark, a position of the mark can be detected by using a camera serving as an image recognition device instead of the displacement sensor 52, and the predetermined position on the outer circumferential surface of the spool 10 can be specified.

This embodiment is suitable not only for the case of measurement of the bending amount of the spool 10 but also for a case where a depth of the notch 15, a length of the notch 15, and roundness of the spool 10 are measured. Moreover, this embodiment is also suitable for a case where burrs generated in machining of the notch 15 are removed and a case where the spool 10 is further machined.

According to the aforementioned embodiment, the following effects are exerted.

Since the dent portion 16 is provided at the position away from the center axis D of the first land portion 11, the position of the notch 15 on the outer circumferential surface of the first land portion 11 is specified as the position away from the dent portion 16 by the predetermined distance in the circumferential direction of the first land portion 11. Therefore, even if the spool 10 is removed from the chuck of the device for machining the spool 10, the position of the notch 15 on the outer circumferential surface of the first land portion 11 can be specified.

Moreover, since the dent portion 16 is closed by the inner wall of the accommodating hole 21 when the spool 10 is at the shut-off position, the flow of the working oil from the first passage 22 through the dent portion 16 to the second passage 23 is shut off. Therefore, the flow of the working oil in the first passage 22 to the second passage 23 through the dent portion 16 can be prevented.

A constitution, an action, and the effect of the embodiment of the present invention will be described below in summary.

The spool 10 assembled into the valve device 100 includes the first and second land portions 11 and 12 and the small-diameter portion 13 each having the circular outer circumferential surface, and the dent portion 16 provided at the position away from the center axis D of the first land portion 11, the dent portion 16 being configured to determine the reference position in the circumferential direction of the first and second land portions 11 and 12 and the small-diameter portion 13.

In this constitution, since the dent portion 16 is provided at the position away from the center axis D of the first land portion 11, the position of the notch 15 on the outer circumferential surface of the first land portion 11 is specified as the position away from the dent portion 16 by the predetermined distance in the circumferential direction of the first land portion 11. Therefore, even if the spool 10 is removed from the chuck of the device for machining the spool 10, the position of the notch 15 on the outer circumferential surface of the first land portion 11 can be specified.

Moreover, in the spool 10, the dent portion 16 is provided on the outer circumferential surface of the first land portion 11, the second land portion 12 or the small-diameter portion 13.

In this constitution, since the dent portion 16 is provided on the outer circumferential surface of the first land portion 11, the second land portion 12 or the small-diameter portion 13, when a portion different from the dent portion 16 on the outer circumferential surface of the first land portion 11, the second land portion 12 or the small-diameter portion 13 is machined, it is not necessary to remove the spool 10 from the device for forming the dent portion 16 in the spool 10. Therefore, the spool 10 can be fabricated more easily.

Moreover, in the spool 10, the dent portion 16 is provided on the end surface of the first land portion 11 or the second land portion 12.

In this constitution, since the dent portion 16 is provided on the end surface of the first land portion 11 or the second land portion 12, even in the case of the spool 10 with a different length or outer diameter, the position of the dent portion 16 from the center axis D of the first land portion 11 or the second land portion 12 does not have to be changed. Therefore, the predetermined position on the outer circumferential surface of the spool 10 can be specified more easily.

Moreover, the spool 10 has the annular groove 13a and the first and second land portions 11 and 12, and the first and second land portions 11 and 12 have axial dimensions formed longer than that of the annular groove 13a, and a circular portion having a circular outer circumferential surface is the first or second land portion 11 or 12.

In this constitution, since the first or second land portion 11 or 12 of the spool 10 is used as a circular portion, the dent portion 16 is provided on the first or second land portion 11 or 12 having the axial dimension longer than that of the annular groove 13a. Therefore, an area for providing the dent portion 16 can be ensured easily.

Moreover, since the spool 10 has the first land portion 11, the second land portion 12, and the small-diameter portion 13 having a diameter smaller than those of the first and second land portions 11 and 12, the small-diameter portion 13 being configured to form the annular groove 13a between the first land portion 11 and the second land portion 12, and a circular portion with the circular outer circumferential surface is the small-diameter portion 13.

In this constitution, since the small-diameter portion 13 forming the annular groove 13a is used as a circular portion, the dent portion 16 is provided on the small-diameter portion 13, and there is no need to provide the dent portion 16 on the first and second land portions 11 and 12. Therefore, an influence of the dent portion 16 can be prevented from reaching the control of the flow of the working oil by the first and second land portions 11 and 12.

The valve device 100 includes the aforementioned spool 10, and the valve body 20 having the accommodating hole 21 configured to slidably accommodates the spool 10 and the first and second passages 22 and 23 communicating with the accommodating hole 21, and the spool 10 has the shut-off position in which the communication between the first passage 22 and the second passage 23 is shut off, the dent portion 16 is formed on the outer circumferential surface of the spool 10, and the dent portion 16 is located at the position closed by the inner wall of the accommodating hole 21 when the spool 10 is at the shut-off position.

In this constitution, when the spool 10 is at the shut-off position, the dent portion 16 is closed by the inner wall of the accommodating hole 21, and thus, the first passage 22 and the second passage 23 do not communicate with each other through the dent portion 16 but the flow is reliably shut off. Therefore, the flow of the working oil in the first passage 22 and the second passage 23 through the dent portion 16 can be prevented.

The rod-shaped member according to this embodiment is not limited to the spool 10. The rod-shaped member may be a shaft assembled into a hydraulic motor and a hydraulic pump and a puppet assembled into a poppet valve and the like.

Embodiments of this invention were described above, but the above embodiments are merely examples of applications of this invention, and the technical scope of this invention is not limited to the specific constitutions of the above embodiments.

This application claims priority based on Japanese Patent Application No.2015-138604 filed with the Japan Patent Office on July 10, 2015, the entire contents of which are incorporated into this specification.

## Claims

1. A rod-shaped member assembled in a fluid pressure device, comprising:
a circular portion in which an outer circumferential surface has a circular shape; and
a reference portion provided at a position away from a center axis of the circular portion, the reference portion being configured to determine a reference position in a circumferential direction of the circular portion.

2. The rod-shaped member according to claim 1, wherein
the reference portion is provided on the outer circumferential surface of the circular portion.

3. The rod-shaped member according to claim 1, wherein
the reference portion is provided on an end surface of the circular portion.

4. The rod-shaped member according to claim 1, wherein
the rod-shaped member is a spool having an annular groove and a land portion;
the land portion is formed having an axial dimension longer than that of the annular groove; and
the circular portion is the land portion.

5. The rod-shaped member according to claim 1, wherein
the rod-shaped member is a spool having a first land portion, a second land portion, and a small-diameter portion having a diameter smaller than those of the first and second land portions, the small-diameter portion being configured to form an annular groove between the first land portion and the second land portion; and
the circular portion is the small-diameter portion.

6. A valve device, comprising:
a spool as the rod-shaped member according to claim 1; and
a valve body having an accommodating hole configured to slidably accommodate the spool and first and second passages configured to communicate with the accommodating hole, wherein
the spool has a shut-off position in which a communication between the first passage and the second passage is shut off;
the reference portion is a dent portion formed on an outer circumferential surface of the spool; and
the dent portion is at a position closed by an inner wall of the accommodating hole when the spool is at the shut-off position.
